(19) Europäisches Patentamt
European Patent Office
Office européen des brevets

(11) **EP 4 592 351 A1**

(12) **EUROPEAN PATENT APPLICATION**
published in accordance with Art. 153(4) EPC

(43) Date of publication:
**30.07.2025 Bulletin 2025/31**

(21) Application number: **24874840.2**

(22) Date of filing: **26.07.2024**

(51) International Patent Classification (IPC):
***C08L 67/02*** *(2006.01)* ***C08L 69/00*** *(2006.01)*
***C08K 7/14*** *(2006.01)* ***C08G 64/18*** *(2006.01)*
***C08J 3/22*** *(2006.01)*

(52) Cooperative Patent Classification (CPC):
**C08G 64/18; C08J 3/22; C08K 7/14; C08L 67/02; C08L 69/00**

(86) International application number:
**PCT/KR2024/010890**

(87) International publication number:
**WO 2025/075281 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.10.2023 KR 20230132213**

(71) Applicant: **LG CHEM, LTD.**
**Seoul 07336 (KR)**

(72) Inventors:
- **KIM, Kwang Joon**
  **Daejeon 34122 (KR)**
- **KWON, Tae Hun**
  **Daejeon 34122 (KR)**
- **PARK, Jae Chan**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **THERMOPLASTIC RESIN COMPOSITION, METHOD FOR PRODUCING SAME, AND MOLDED ARTICLE INCLUDING SAME**

(57) The present invention relates to a thermoplastic resin composition, a method of preparing the same and a molded article including the same. More particularly, the thermoplastic resin composition according to the present invention is prepared using changed materials, so that the heat distortion temperature and impact strength in a trade-off relationship can be improved, thereby satisfying heat resistance required for radar performance improvement and impact strength required for diversified applications of radomes and being useable in a wider range of electrical components including radomes.

【FIG. 1】

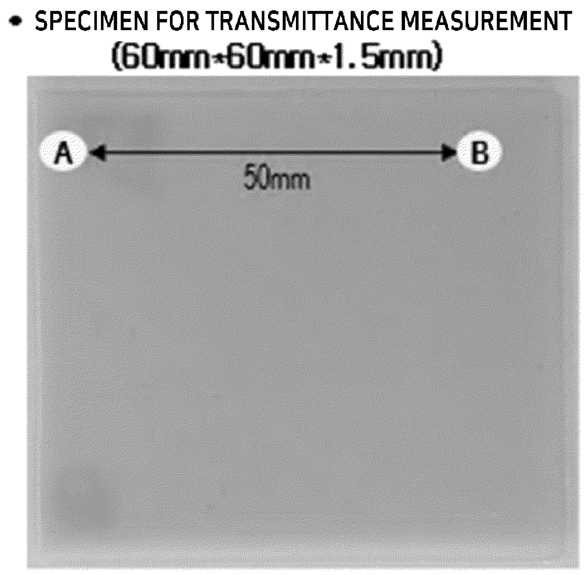

## Description

[Technical Field]

[Cross-Reference to Related Application]

This application claims priority to Korean Patent Application No. 10-2023-0132213, filed on October 05, 2023, based on the priority of the above patent, in the Korean Intellectual Property Office, the disclosure of which is incorporated herein by reference.

The present invention relates to a thermoplastic resin composition, a method of preparing the same and a molded article including the same, and more specifically a thermoplastic resin composition that can be used for a wider range of electrical components including radomes by improving a heat distortion temperature and impact strength in a trade-off relationship, a method of preparing the thermoplastic resin composition and a molded article including the thermoplastic resin composition.

[Background Art]

Polyester resins are applied to various parts including automobile interior materials due to their low unit price, mechanical properties, thermal characteristics, and excellent moldability.

In particular, polybutylene terephthalate (PBT) is used as a laser transmission material due to its low crystallinity. Here, polycarbonate (PC), which is an amorphous resin, is mixed and used as a material for improving laser transmission.

However, when a polyester resin having low crystallinity is mixed with an amorphous resin, there is a problem in that heat distortion temperature and impact strength are reduced.

Therefore, there is a need for development of a material capable of being used for a wider range of electrical components including radomes by improving heat resistance and impact strength.

[Related Art Document]

[Patent Document]

Korean Patent Application Publication No. 2020-0066480 (published on 2020.06.10)

[Disclosure]

[Technical Problem]

Therefore, the present invention has been made in view of the above problems, and it is one object of the present invention to provide a thermoplastic resin composition that has superior economic efficiency and can be used for a wider range of radomes and other electrical components by improving heat resistance and impact strength in response to market demands for improved radar performance and diversification of radome applications.

It is another object of the present invention to provide a method of preparing the thermoplastic resin composition.

It is yet another object of the present invention to provide a molded article manufactured using the thermoplastic resin composition.

The above and other objects can be accomplished by the present invention described below.

[Technical Solution]

In accordance with an aspect of the present invention, the above and other objects can be accomplished by the provision of A thermoplastic resin composition, including: polybutylene terephthalate (PBT), polycarbonate (PC) and siloxane-based copolycarbonate (Si-PC), and glass fiber, wherein a weight ratio of the polybutylene terephthalate (PBT) to the polycarbonate (PC) and the siloxane-based copolycarbonate (Si-PC) is in a range of 4:6 to 6:4 (PBT:PC+Si-PC), a weight ratio of the polycarbonate (PC) to the siloxane-based copolycarbonate (Si-PC) satisfies 3.5:6.5 to 6.5:3.5 (PC:Si-PC),

a use amount of the polybutylene terephthalate (PBT) is a, a use amount of the glass fiber is b, and a use amount of the polycarbonate (PC) is c, a>b>c is satisfied, and
a use amount of the polybutylene terephthalate (PBT) is a', a use amount of the glass fiber is b', and a use amount of the siloxane-based copolycarbonate (Si-PC) is d, a'>b'>d is satisfied.

II) In I), the polybutylene terephthalate (PBT) may be included in an amount of 31.3 to 37 % by weight of 100 % by weight of the total amount of all the components (the polybutylene terephthalate (PBT), the polycarbonate (PC), the siloxane-based copolycarbonate (Si-PC), the glass fiber and the additive) constituting the thermoplastic resin composition.

III) In I) or II), the glass fiber may be included in an amount of 10 to 40 % by weight of 100 % by weight of the total amount of all the components (the polybutylene terephthalate (PBT), the polycarbonate (PC), the siloxane-based copolycarbonate (Si-PC), the glass fiber and the additive) constituting the thermoplastic resin composition.

IV) In I) to III), the siloxane-based copolycarbonate (Si-PC) may be included in an amount of 22 % by weight or less of 100 % by weight of the total amount of all the components (the polybutylene terephthalate (PBT), the polycarbonate (PC), the siloxane-based copolycarbonate (Si-PC), the glass fiber and the additive) constituting the thermoplastic resin composition.

V) In accordance with another aspect of the present invention, there is provided a thermoplastic resin composition, including: of 100 % by weight of a total of polybutylene terephthalate (PBT), polycarbonate (PC) and siloxane-based copolycarbonate (Si-PC); glass fiber; and an additive, 31.3 to 37 % by weight of the polybutylene terephthalate (PBT), 24 % by weight or less of the polycarbonate (PC), 24 % by weight or less of the siloxane-based copolycarbonate (Si-PC), and 10 to 40 % by weight of the glass fiber.

VI) In V), the polybutylene terephthalate (PBT) may have a weight average molecular weight of 10,000 to 80,000 g/min.

VII) In V) to VI), the polybutylene terephthalate (PBT) and polycarbonate (PC) may be included in a weight ratio (PBT:PC) of 1:0.3 to 1:1.1.

VIII) In V) to VII), the polycarbonate (PC) may be included in an amount of 13 to 21 % by weight of 100 % by weight of a total of the polybutylene terephthalate (PBT), the polycarbonate (PC), the siloxane-based copolycarbonate (Si-PC), the glass fiber and the additive.

IX) In V) to VIII), the siloxane-based copolycarbonate (Si-PC) may be included in an amount of 13 to 21 % by weight of 100 % by weight of a total of the polybutylene terephthalate (PBT), the polycarbonate (PC), the siloxane-based copolycarbonate (Si-PC), the glass fiber and an additive.

X) In V) to IX), the polycarbonate (PC) may have a melting index of 0.1 to 30 g/10 min, as measured at 300 °C under a load of 1.2 kg according to ASTM D1238.

XI) In V) to X), the polycarbonate (PC) may have a mold shrinkage rate of 0.005 to 0.007 in/in, as measured according to ASTM D955.

XII) In V) to XI), the glass fiber may be a chop strand having an average diameter of 7 to 15 μm and an average length of 3 to 9 mm.

XIII) In V) to XII), the additive may include one or more selected from among a nucleating agent, an activator, talc, an antioxidant and a colorant.

XIV) In V) to XIII), the thermoplastic resin composition may be a material used in an electrical component.

XV) In V) to XIV), the thermoplastic resin composition may have a laser transmittance (%) of 67.5% or more, as measured using ETM-31 equipment (980 nm) manufactured by EVlaser Co.

XVI) In V) to XV), the thermoplastic resin composition may have a heat distortion temperature of 167.6 °C or higher as measured under a load of 0.45 MPa (flatwise) using a specimen having a thickness of 4 mm according to ISO 75.

XVII) In V) to XVI), the thermoplastic resin composition may have a room-temperature Izod impact strength (23 °C, Notched) of 9.5 kJ/$m^2$ or more as measured using a specimen having a thickness of 4 mm according to ISO 180.

XVIII) In V) to XVII), the thermoplastic resin composition may have a low-temperature Izod impact strength (-30 °C, Notched) of 8.4 kJ/$m^2$ or more as measured using a specimen having a thickness of 4 mm according to ISO 180.

In accordance with yet another aspect of the present invention, there is provided a method of preparing a thermoplastic resin composition, the method including: feeding polybutylene terephthalate (PBT), polycarbonate (PC) and siloxane-based copolycarbonate (Si-PC); glass fiber; and an additive into an extruder, and performing melt-kneading and extruding, wherein a weight ratio of the polybutylene terephthalate (PBT) to the polycarbonate (PC) and the siloxane-based copolycarbonate (Si-PC) is in a range of 4:6 to 6:4 (PBT:PC+Si-PC), a weight ratio of the polycarbonate (PC) to the siloxane-based copolycarbonate (Si-PC) satisfies 3.5:6.5 to 6.5:3.5 (PC:Si-PC),

a use amount of the polybutylene terephthalate (PBT) is a, a use amount of the glass fiber is b, and a use amount of the polycarbonate (PC) is c, a>b>c is satisfied, and

a use amount of the polybutylene terephthalate (PBT) is a', a use amount of the glass fiber is b', and a use amount of the siloxane-based copolycarbonate (Si-PC) is d, a'>b'>d is satisfied.

In accordance with still another aspect of the present invention, there is provided a method of preparing a thermoplastic resin composition, the method including: feeding, of 100 % by weight of a total of polybutylene terephthalate

(PBT), polycarbonate (PC) and siloxane-based copolycarbonate (Si-PC); glass fiber; and an additive, 31.3 to 37 % by weight of the polybutylene terephthalate (PBT), 24 % by weight or less of the polycarbonate (PC), 24 % by weight or less of the siloxane-based copolycarbonate (Si-PC), and 10 to 40 % by weight of the glass fiber into an extruder and performing melt-kneading and extruding.

XXI) In accordance with yet another aspect of the present invention, there is provided a molded article including the thermoplastic resin composition described above.
XXII) In XXI), the molded article may be an electrical component.
XXIII) In XXI) or XXII), the electrical component may be a connector, a sensor component, a component for a parking brake system, or the like.
XXIV) In XXI) or XXIII), the sensor component may be a radome, an advanced driver assistance system (ADAS), or the like.

[Advantageous effects]

A thermoplastic resin composition according to the present invention can improve the heat distortion temperature and impact strength, which are in a trade-off relationship, in response to the market's demand for improved radar performance and diversification of radome applications, thereby being capable of providing a thermoplastic resin that can be used in a wider variety of electrical components including radomes.

Therefore, the thermoplastic resin composition according to the present invention can be applied to various electrical material fields including connectors, sensors, and parking brake systems that particularly require its physical properties.

[Description of Drawings]

FIG. 1 illustrates a photograph of a specimen manufactured by injection-molding a material according to one embodiment of the present invention, and the photograph shows the laser transmittance measured at one location of the specimen and another location thereof.
FIG. 2 illustrates the cross-section of an extruder used in a method of manufacturing a molded article according to an embodiment of the present invention.

[Best mode]

Hereinafter, the present invention will be described in more detail to aid in understanding of the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

In this description, a polymer including a certain compound means a polymer prepared by polymerizing the compound, and a unit in the polymer is derived from the compound.

Unless otherwise specified, all numbers, values, and/or expressions expressing quantities of ingredients, reaction conditions, polymer compositions, and formulations used herein are to be understood as being qualified by the term "about." This is because these numbers are essentially approximations that reflect, among other things, the various uncertainties of measurement that arise in obtaining these values. In addition, when numerical ranges are disclosed in this invention, such ranges are contiguous and include all values from the minimum value to the maximum value of such ranges unless otherwise indicated. Also, when such ranges refer to integers, all integers inclusive from the minimum value to the maximum value are included unless otherwise specified.

In the present invention, when a range is specified for a variable, it will be understood that the variable includes all values within a range including the endpoints of the range. For example, a range of "5 to 10" includes values of 5, 6, 7, 8, 9, and 10, any subranges such as 6 to 10, 7 to 10, 6 to 9, and 7 to 9, and any values among integers that fit within the scope of a range such as 5.5 to 8.5 and 6.5 to 9. Also, a range of 10 to 30 % includes values such as 10 %, 11 %, 12 %, and 13 %, all integers up to 30 %, and any values among all rational number within the scope of a range, such as 10.5 %, 15.5 %, 25.5 %.

The present inventors confirmed that, when polycarbonate (PC) is mixed with siloxane-based copolycarbonate (Si-PC), etc., the heat distortion temperature and impact strength of a molded article were improved so that the heat resistance, which is important for radar performance, and the impact strength, which is important for the diversification of

the use of a radome, were greatly improved. Further research was devoted, thus completing the present invention.

A thermoplastic resin composition according to an embodiment of the present invention includes, for example, polybutylene terephthalate (PBT), polycarbonate (PC), siloxane-based copolycarbonate (Si-PC), and glass fiber.

In accordance with an embodiment of the present invention, a content ratio of polybutylene terephthalate (PBT) to polycarbonate (PC) and siloxane-based copolycarbonate (Si-PC) may be, for example, in a weight ratio (PBT:PC+Si-PC) range of 4:6 to 6:4.

In the weight ratio (PBT:PC+Si-PC) range, the physical property balance among laser transmittance, heat distortion temperature and impact strength may be provided. The weight ratio (PBT:PC+Si-PC) may be preferably 4.5:5.5 to 6:4, more preferably 4.5:5.5 to 5.5:6.5.

Hereinafter, components constituting the thermoplastic resin composition are examined in detail.

## Polybutylene terephthalate (PBT)

The polybutylene terephthalate (PBT) according to an embodiment of the present invention imparts moldability and chemical resistance to a thermoplastic resin composition containing the same.

The polybutylene terephthalate (PBT) prevents the penetration of chemicals introduced from the outside and, improves the flowability of a thermoplastic resin composition containing it during injection-molding, thereby improving the appearance quality.

When the polybutylene terephthalate (PBT) has an intrinsic viscosity (I.V.) of 0.6 to 1.4, or 0.7 to 1.2, a heat distortion temperature and impact strength in a trade-off relationship may be appropriately improved.

When intrinsic viscosity is measured, unless noted otherwise, a sample solution with a concentration of 0.05 g/ml is prepared by completely dissolving a sample in methylene chloride as a solvent, and then is filtered using a filter to obtain a filtrate. Then, using the obtained filtrate, intrinsic viscosity is measured at 20 °C using a Ubbelohde viscometer.

The polybutylene terephthalate (PBT) may have, for example, a weight average molecular weight (Mw) of 10,000 to 80,000 g/min, 20,000 to 100,000 g/min as a particular example, 30,000 to 90,000 g/min as a preferred example. As a more preferred example, the weight average molecular weight (Mw) may be 40,000 to 80,000 g/min, or 50,000 to 70,000 g/min.

In the present disclosure, the weight average molecular weight (Mw) may be measured by terminal group analysis or gel permeation chromatography (GPC).

When using GPC, the weight average molecular weight measured as a relative value for a standard polystyrene (PS) sample through Gel Permeation Chromatography (GPC, waters breeze) using tetrahydrofuran as a particular example of an eluent.

The polybutylene terephthalate (PBT) may be prepared using a method known in the art without particular limitation, or a commercially available product may be used.

The polybutylene terephthalate (PBT) may be included in an amount of, for example, 31.3 to 37 % by weight, 32 to 36 % by weight as a particular example, preferably 33 to 36 % by weight, of 100 % by weight of the total amount of all the components (polybutylene terephthalate (PBT), polycarbonate (PC), siloxane-based copolycarbonate (Si-PC), glass fiber and an additive) constituting the thermoplastic resin composition. In this case, the physical property balance between heat distortion temperature and impact strength may be satisfied.

## Polycarbonate (PC)

The melting index, measured at 300 °C under a load of 1.2 kg according to ASTM D1238, of polycarbonate (PC) may be, for example, 0.1 to 30 g/min, preferably 1 to 25 g/10 min, more preferably 10 to 22 g/10 min. In this range, the thermal properties, such as moldability and processability, and workability of a final thermoplastic resin composition may be improved.

When the melting index is greater than 30 g/10 min, it may cause quality unevenness and molding defects.

The polycarbonate (PC) may be, for example, a solid polymer of a melt polymer of an aromatic dicarboxylic acid or a derivative thereof, an aliphatic diol, and a polyalkylene oxide.

The aromatic dicarboxylic acid or a derivative thereof and the aliphatic diol may constitute a hard fraction of the polycarbonate (PC) described above, and the polyalkylene oxide may constitute a soft fraction of the polycarbonate (PC) described above.

The aromatic dicarboxylic acid may be one or more selected from the group consisting of, for example, terephthalic acid (TPA), isophthalic acid (IPA), 2,6-naphthalene dicarboxylic acid (2,6-NDCA), 1,5- naphthalene dicarboxylic acid (1,5-NDCA), 1,4-cyclohexane dicarboxylic acid (1,4-CHDA), dimethyl terephthalate (DMT), dimethyl isophthalate (DMI), 2,6-dimethyl naphthalene dicarboxylate (2,6-NDC) and dimethyl 1,4-cyclohexanedicarboxylate (DMCD), preferably dimethyl terephthalate (DMT).

The aromatic dicarboxylic acid or a derivative thereof may be included, for example, in an amount of 25 to 60 % by

weight, preferably 29 to 55 % by weight, more preferably 34 to 45 % by weight of 100 % by weight of the total amount of all the components (aromatic dicarboxylic acid or a derivative thereof, aliphatic diol and polyalkylene oxide) constituting the polycarbonate (PC). In this range, excellent reaction balance may be provided.

The aliphatic diol may be a diol having a number average molecular weight (Mn) of, for example, 300 g/min or less. As a particular example, the aliphatic diol may be one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol, and is preferably 1,4-butanediol.

In the present disclosure, the number average molecular weight (Mn) may be measured by terminal group analysis or gel permeation chromatography (GPC).

As a specific example of the number average molecular weight measurement using GPC, a relative value for a standard polystyrene (PS) sample may be measured by Gel Permeation Chromatography (GPC, water breeze) using tetrahydrofuran as an eluent.

The aliphatic diol may be included in an amount of, for example, 10 to 40 % by weight, preferably 15 to 40 % by weight, more preferably 20 to 30 % by weight of 100 % by weight of the total amount of all the components (aromatic dicarboxylic acid or a derivative thereof, aliphatic diol and polyalkylene oxide) constituting the polycarbonate (PC). In this range, excellent reaction balance may be provided.

The polyalkylene oxide may include an aliphatic component having a number average molecular weight (Mn) of, for example, 600 to 3,000 g/min, 1,000 to 2,500 g/min, 1,500 to 2,200 g/min or 2,000 to 3,000 g/min, thereby constituting a soft fraction.

The polyalkylene oxide may be, for example, one or more selected from the group consisting of polyoxyethylene glycol, polypropylene glycol, poly(tetramethylene ether) glycol (PTMEG), polyoxyhexamethylene glycol, a copolymer of ethylene oxide and propylene oxide, an ethylene oxide addition polymer of polypropylene oxide glycol, and a copolymer of ethylene oxide and tetrahydrofuran, preferably poly(tetramethylene ether) glycol (PTMEG).

The polyalkylene oxide having a number average molecular weight (Mn) of 600 to 3,000 g/min may be, for example, poly(tetramethylene ether) glycol.

As another example, the polyalkylene oxide having a number average molecular weight (Mn) of 2,000 to 3,000 g/min may be polypropylene glycol whose terminal is capped with ethylene oxide.

The polyalkylene oxide may be included in an amount of, for example, 15 to 60 % by weight, preferably 15 to 55 % by weight, more preferably 15 to 45 % by weight of 100 % by weight of the total amount of all the components (aromatic dicarboxylic acid or a derivative thereof, aliphatic diol and polyalkylene oxide) constituting the polycarbonate (PC). In this range, excellent reaction balance may be provided.

The polycarbonate (PC) may include an additive as needed, and may increase the melt viscosity and melt strength of an elastomer, for example, by using a branching agent.

The branching agent may be, for example, one or more selected from the group consisting of glycerol, pentaerythritol, trimellitic acid or anhydride thereof, trimethylol propane and neopentyl glycol, preferably trimellitic acid anhydride.

The branching agent may be included in an amount of, for example, 0.05 to 0.1 parts by weight, preferably 0.05 to 0.09 parts by weight, more preferably 0.06 to 0.09 parts by weight of 100 parts by weight of the total amount of all the components (aromatic dicarboxylic acid or a derivative thereof, aliphatic diol and polyalkylene oxide) constituting the polycarbonate (PC). In this range, it is easy to control the inherent viscosity during melt polymerization by increasing the melt viscosity.

The polycarbonate (PC) may be a solid polymer for a melt (condensation)polymer of the above-described components.

As a particular example, the polycarbonate (PC) may be prepared by performing an ester exchange reaction of the above-described aromatic dicarboxylic acid, aliphatic diol, and polyalkylene oxide in the presence of a titanium butoxide (TBT) catalyst at 140 to 215 °C for about 120 minutes to generate a bis(4-hydroxy)butyl terephthalate (BHBT) oligomer, then adding a TBT catalyst and performing a melt (condensation) polymerization reaction at 215 to 245 °C for about 120 minutes while stepwise reducing the pressure from 760 torr to 0.3 torr.

The melt (condensation)polymerization reaction may be performed, for example, until the melt (condensation) polymer has a melt flow index (MFI) of 20 to 25 g/10 min as measured at 230 °C under a load of 2.16 kg according to ASTM D1238.

After the melt (condensation)polymerization reaction is completed, strands may be pelletized while the inside of a reactor is discharged under nitrogen pressure to produce pellets.

The pellets may be solid-state polymerized, for example, in a solid-state polymerization reactor or a rotating vacuum dryer under high vacuum inert gas conditions at 140 to 200 °C for about 10 to 24 hours.

The solid-state polymerizing may be performed, for example, until a solid polymer has a melt flow index (MFI) of 30 g/10 min or less, preferably 0.1 to 30 g/10 min (230 °C, 2.16 kg), and more preferably 1 to 30 g/10 min (300 °C, 1.2 kg), as measured at 230 °C under a load of 2.16 kg according to ASTM D-1238, so as to produce a high-viscosity polymer.

The hardness of the polycarbonate (PC) may be expressed as shore hardness-D measured according to ISO 868, and the hardness may be determined depending upon the content of polyalkylene oxide.

The polyalkylene oxide may be used in an amount of 10 to 50 % by weight, preferably 15 to 50 % by weight, more preferably 15 to 45 % by weight based on 100 % by weight in total of polycarbonate (PC) such that the shore hardness-D of the polycarbonate (PC) is 35 to 60, preferably 40 to 55. In this range, the hardness of polycarbonate (PC) is low, so that flexibility is good, and the heat resistance and compatibility of the resin are excellent.

The content of the polycarbonate (PC) may be, for example, 24 % by weight or less, 4 to 24 % by weight as a particular example, preferably 5 to 22 % by weight, of 100 % by weight of the total amount of all the components (the polybutylene terephthalate (PBT), the polycarbonate (PC), the siloxane-based copolycarbonate (Si-PC), the glass fiber and the additive) constituting the thermoplastic resin composition. When the polycarbonate (PC) is contained in a range greater than the range, the heat distortion temperature of a molded article manufactured using a thermoplastic resin composition containing the polycarbonate (PC) may be lowered, whereas, when the polycarbonate (PC) is contained in content less than the range, the laser transmittance of a molded article manufactured using a thermoplastic resin composition containing the polycarbonate (PC) may be decreased.

## Siloxane-based copolycarbonate (Si-PC)

The siloxane-based copolycarbonate (Si-PC) according to an embodiment of the present invention means a copolymer that simultaneously includes a polycarbonate-based repeating unit in which a polysiloxane structure is not introduced into its main chain and a polycarbonate-based repeating unit in which a polysiloxane structure is introduced into its main chain.

The copolycarbonate simultaneously includes a first repeating unit having no siloxane bond represented by Formula 1 below, and a second repeating unit having one or more siloxane bonds including a repeating unit represented by each of Formulas 2 and 3 below.

Here, a molar ratio of the aromatic polycarbonate-based first repeating unit to the aromatic polycarbonate-based second repeating unit having one or more siloxane bonds is preferably 1:0.004-0.006, and a weight ratio thereof is preferably 1:0.04-0.07.

Specifically, the repeating unit represented by Formula 1 below is formed by reacting an aromatic diol compound with a carbonate precursor:

[Formula 1]

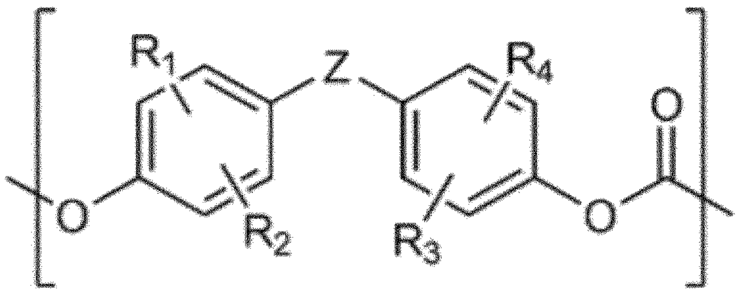

In Formula 1, preferably, R1 to R4 are each independently hydrogen, methyl, chloro, or bromo.

Preferably, Z is unsubstituted or phenyl-substituted straight or branched C1-10 alkylene, more preferably methylene, ethane-1,1-diyl, propane-2,2-diyl, butane-2,2-diyl, 1-phenylethane-1,1-diyl, or diphenylmethylene.

Preferably, Z is cyclohexane-1,1-diyl, O, S, SO, SO2, or CO.

The repeating unit represented by Formula 1 may be derived from one or more aromatic diol compounds selected from the group consisting of bis(4-hydroxyphenyl)methane, bis(4-hydroxyphenyl)ethe, bis(4-hydroxyphenyl)sulfone, bis(4-hydroxyphenyl)sulfoxide, bis(4-hydroxyphenyl)sulfide, bis(4-hydroxy phenyl) ketone, 1,1-bis(4-hydroxyphenyl) ethane-, bisphenol A, 2,2-bis(4-hydroxyphenyl)butane, 1,1-bis(4-hydroxyphenyl)cyclohexane, 2,2-bis(4-hydroxy-3,5-dibromophenyl) propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane-, bis(4-hydroxyphenyl)diphenylmethane, and a,ω-bis[3-(o-hydroxyphenyl)propyl]polydimethylsiloxane.

The 'derived from an aromatic diol compound' means that a hydroxyl group of an aromatic diol compound and a carbonate precursor react to form the repeating unit represented by Formula 1. For example, when bisphenol A, which is an aromatic diol compound, and triphosgene, which is a carbonate precursor, are polymerized, the first repeating unit

represented by Formula 1 is represented by Formula 1-1 below:

[Formula 1-1]

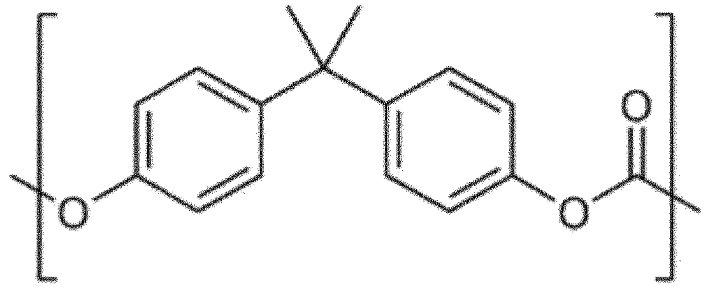

As the carbonate precursor, one or more selected from the group consisting of dimethyl carbonate, diethyl carbonate, dibutyl carbonate, dicyclohexyl carbonate, diphenyl carbonate, ditoryl carbonate, bis(chlorophenyl) carbonate, di-m-cresy carbonate, dinaphthyl carbonate, bis(diphenyl) carbonate, phosgene, triphosgene, diphosgene, bromophosgene and bishaloformate may be used. Preferably, triphosgene or phosgene may be used.

Specifically, the unit represented by Formula 2 below may be represented as follows:

[Formula 2]

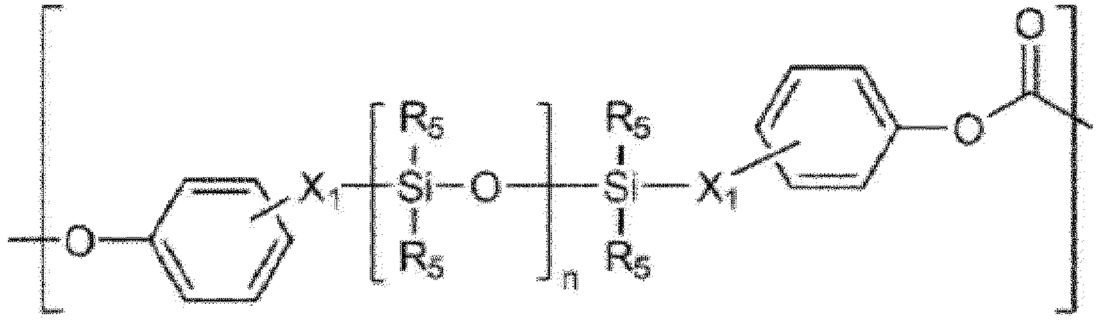

In Formula 2, $X_1$ is each independently C1-10 alkylene, four $R_5$ are each independently a hydrogen; C1-10 alkoxy unsubstituted or substituted with oxiranyl, or C1-15 alkyl substituted with C6-20 aryl; a halogen; C1-10 alkoxy; aryl; C1-10 haloalkyl; or C6-20 aryl, and n is an integer of 1 to 200.

In Formula 2, preferably, $X_1$ is each independently C2-10 alkylene, more preferably C2-4 alkylene, most preferably propane-1,3-diyl.

Preferably, four $R_5$ are each independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, aryl, 2,2,2-trifluoro ethyl, 3,3,3-trifluoropropyl, phenyl, or naphthyl.

Preferably, four $R_5$ are each independently C1-10 alkyl, more preferably C1-6 alkyl, more preferably C1-3 alkyl, most preferably methyl.

Preferably, n is an integer of 10 to 50.

More preferably, n is an integer of 10 or more, 15 or more, 20 or more, 25 or more, 30 or more, 31 or more, or 32 or more and 50 or less, 45 or less, 40 or less, 39 or less, 38 or less, 37 or less, or 35 or less.

In addition, the repeating unit represented by Formula 3 may be represented as follows:

[Formula 3]

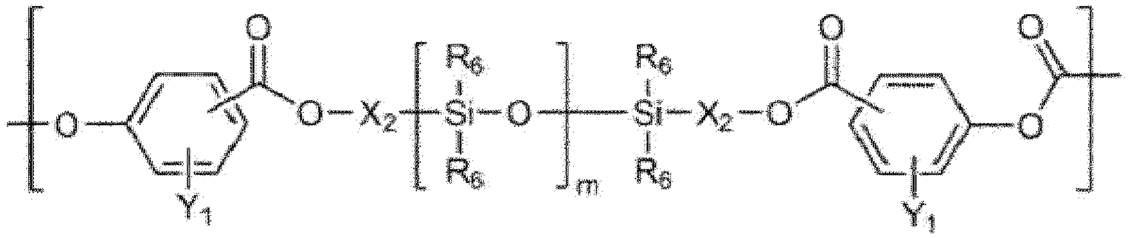

In Formula 3, two X2 are each independently C1-10 alkylene, two Y1 are each independently hydrogen, C1-6 alkyl, halogen, hydroxy, C1-6 alkoxy or C6-20 aryl, four R6 are each independently hydrogen; C1-10 alkoxy unsubstituted or substituted with oxiranyl, or C1-15 alkyl substituted with C6-20 aryl; halogen; C1-10 alkoxy; aryl; C1-10 haloalkyl; or C6-20 aryl, and m is an integer of 1 to 200.

In addition, in Formula 3, preferably, two X2 are each independently C2-10 alkylene, more preferably C2-6 alkylene, most preferably isobutylene.

Preferably, Y1 is a hydrogen.

In addition, preferably, two R6 are each independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, aryl, 2,2,2-trifluoroethyl, 3,3,3-trifluoropropyl, phenyl, or naphthyl.

In addition, preferably, two R6 are each independently C1-10 alkyl, more preferably C1-6 alkyl, more preferably C1-3 alkyl, most preferably methyl.

In addition, preferably, m is an integer of 40 to 100. More preferably, m is an integer of 40 or more, 45 or more, 50 or more, 55 or more, 56 or more, 57 or more, or 58 or more and 100 or less, 80 or less, 75 or less, 70 or less, 65 or less, 64 or less, 63 or less, or 62 or less.

The repeating unit represented by Formula 2 and the repeating unit represented by Formula 3 are derived from a siloxane compound represented by Formula 2-1 below and a siloxane compound represented by Formula 3-1 below, respectively:

[Formula 2-1]

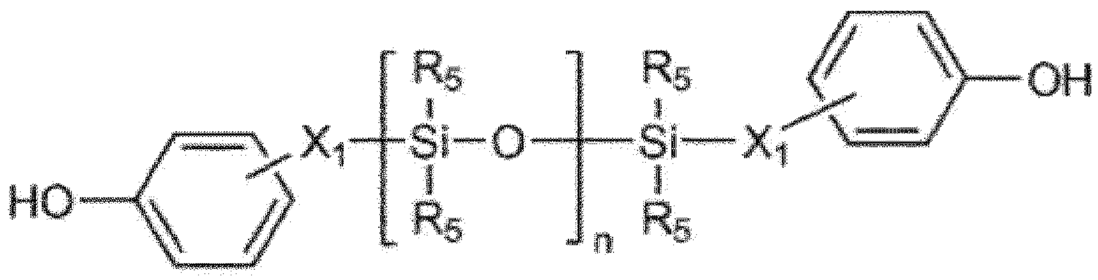

In Formula 2-1, $X_1$, $R_5$ and n are defined as above.

[Formula 3-1]

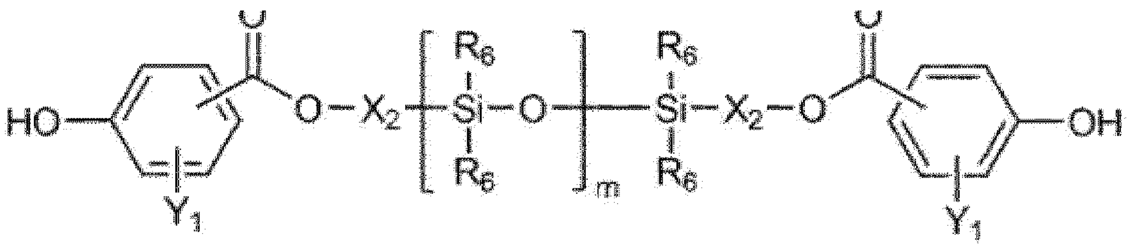

In Formula 3-1, X2, Y1, R6 and m are defined as above.

The 'derived from a siloxane compound' means that the hydroxyl group of each of the siloxane compounds and the carbonate precursor react to form each of the repeating unit represented by Formula 2 and the repeating unit represented by Formula 3.

The carbonate precursors that can be used for forming the repeating units of Formulas 2 and 3 are the same as described in the carbonate precursor that can be used for forming the repeating unit of Formula 1 described above.

Methods of preparing the siloxane compound represented by Formula 2-1 and the siloxane compound represented by Formula 3-1 are, for example, the same as the following Reaction Schemes 1 and 2, respectively:

[Reaction Scheme 1]

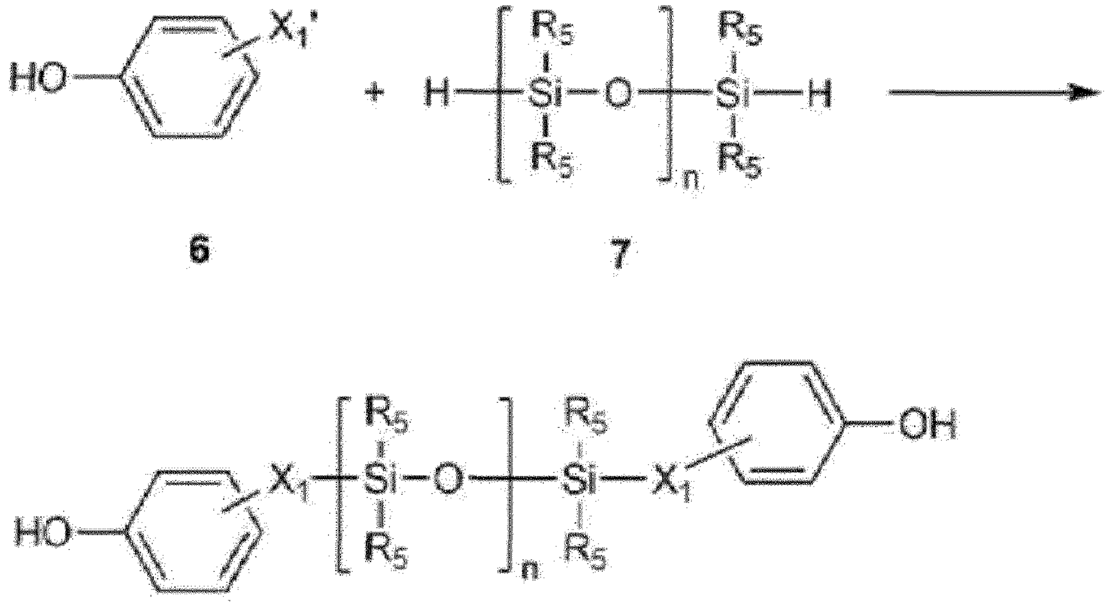

6

7

2-1

In Reaction Scheme 1, $X_1$' is C2-10 alkenyl, and $X_1$, $R_5$ and n are defined as above.

[Reaction Scheme 2]

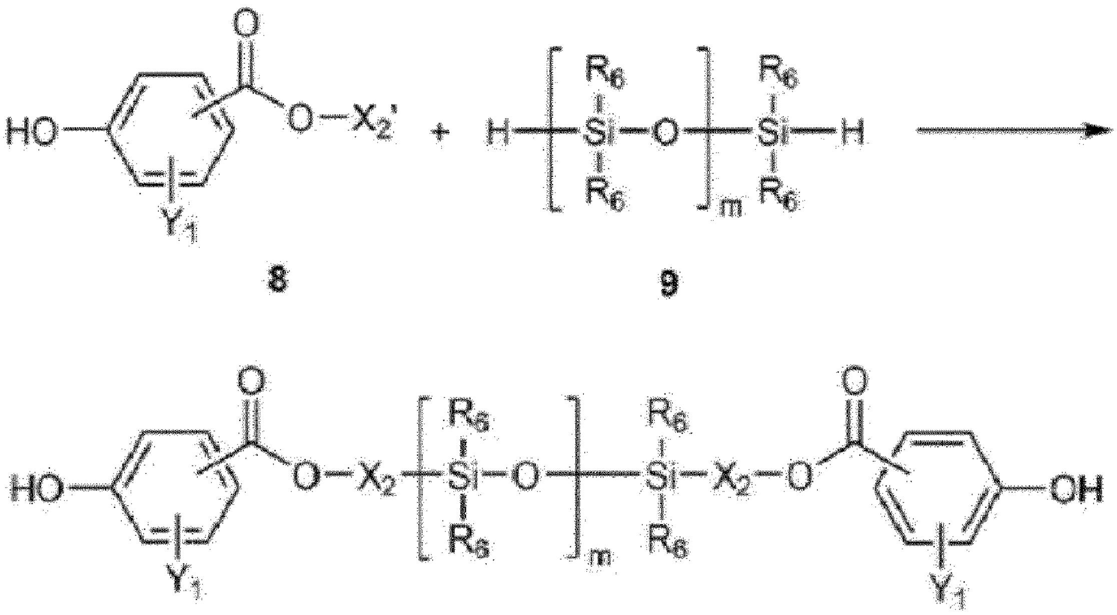

8

9

3-1

In Reaction Scheme 2, X2 is C2-10 alkenyl, and X2, Y1, R6 and m are defined as above.

The reactions of Reaction Scheme 1 and Reaction Scheme 2 are preferably performed in the presence of a metal catalyst. As the metal catalyst, a Pt catalyst is preferred, and as a Pt catalyst, one or more selected from the group consisting of Ashby catalyst, Karstedt catalyst, Lamoreaux catalyst, Speier catalyst, $PtCl_2$ (COD), PtCl2 (benzonitrile)$_2$, and $H_2PtBr_6$ may be used.

The metal catalyst may be used in an amount of 0.001 parts by weight or more, 0.005 parts by weight or more, or 0.01 parts by weight or more and 1 part by weight or less, 0.1 parts by weight or less, or 0.05 parts by weight or less based on 100 parts by weight of the compound represented by Formula 7 or 9.

The reaction temperature is preferably 80 to 100°C.

The reaction time is preferably 1 hour to 5 hours.

The compound represented by Formula 7 or 9 may be prepared by reacting organodisiloxane with organocyclosiloxane in the presence of an acid catalyst, and n and m may be controlled by controlling the contents of the reactants. The reaction temperature is preferably 50 to 70 °C. In addition, the reaction time is preferably 1 hour to 6 hours.

As the organodisiloxane, one or more selected from the group consisting of tetramethyldisiloxane, tetraphenyldisiloxane, hexamethyldisiloxane and hexaphenyldisiloxane may be used.

In addition, the organocyclosiloxane may be, for example, organocyclotetrasiloxane, and examples thereof include octamethylcyclotetrasiloxane, octaphenylcyclotetrasiloxane, and the like.

The organodisiloxane may be used in an amount of 0.1 parts by weight or more, or 2 parts by weight or more and 10 parts by weight or less, or 8 parts by weight or less based on 100 parts by weight of the organocyclosiloxane.

The acid catalyst may be one or more selected from the group consisting of $H_2SO_4$, $HClO_4$ $AlCl_3$, $SbCl_5$, $SnCl_4$ and acid clay.

In addition, the acid catalyst may be used in an amount of 0.1 parts by weight or more, 0.5 parts by weight or more, or 1 part by weight or more and 10 parts by weight or less, 5 parts by weight or less, or 3 parts by weight or less based on 100 parts by weight of organocyclosiloxane.

In particular, the low-temperature impact strength and Yellow Index (YI) of siloxane-based copolycarbonate (Si-PC) may be simultaneously improved by controlling the contents of the repeating unit represented by Formula 2 and the repeating unit represented by Formula 3.

A weight ratio between the repeating units may be 1:99 to 99:1. The weight ratio is preferably 3:97 to 97:3, 5:95 to 95:5, 10:90 to 90:10, or 15:85 to 85:15, more preferably 20:80 to 80:20. The weight ratio between the repeating units corresponds to a weight ratio between siloxane compounds, e.g., the siloxane compound represented by Formula 2-1 and the siloxane compound represented by Formula 3-1.

Preferably, the repeating unit represented by Formula 2 is represented by Formula 2-2 below:

[Formula 2-2]

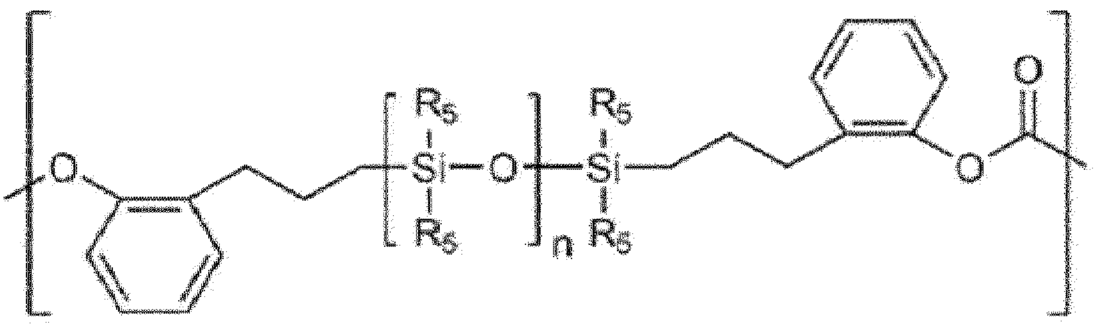

In Formula 2-2, $R_5$ and n are defined as above.

Preferably, $R_5$ is methyl. V

Preferably, the repeating unit represented by Formula 3 is represented by Formula 3-2 below:

[Formula 3-2]

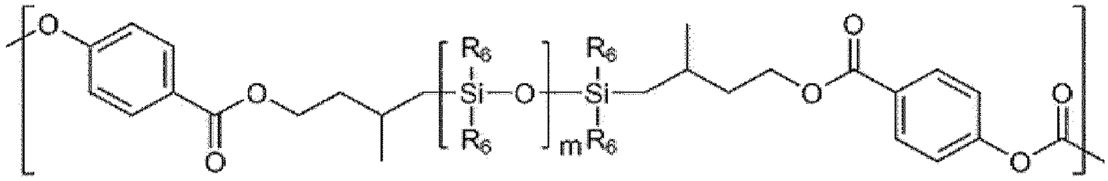

In Formula 3-2, R6 and m are defined as above.

Preferably, R6 is methyl.

Preferably, a weight ratio (Formula 1: (Formula 2 + Formula 3)) of the repeating unit represented by Formula 1 to the total weight of the repeating unit represented by Formula 1 to the repeating unit represented by Formula 2 and the repeating unit represented by Formula 3 is 1:0.001 to 1:0.2, more preferably 1:0.01 to 1:0.1. The weight ratio between the repeating units correspond to a weight ratio of an aromatic diol compound used to form the repeating unit of Formula 1 to a siloxane compound used to form the repeating units of Formulas 2 and 3.

The siloxane-based copolycarbonate (Si-PC) has a weight average molecular weight of 1,000 to 100,000 g/min, more preferably 15,000 to 35,000 g/min. More preferably, the weight average molecular weight (g/min) is 23,000 or more, 24,000 or more, or 25,000 or more. In addition, the weight average molecular weight is 34,000 or less, 33,000 or less, or 32,000 or less.

The siloxane-based copolycarbonate (Si-PC) may be prepared, for example, by polymerizing the aromatic diol compound and the siloxane compound and carbonate precursor represented by Formulas 2-1 and 3-1.

Upon the polymerization, the siloxane compound may be used in an amount of 0.1 % by weight or more, 0.5 % by weight or more, 1 % by weight or more, 1.5 % by weight or more, 2.0 % by weight or more, 2.5 % by weight or more, 2.5 % by weight or more, or 3.0 % by weight or more and 20 % by weight or less, 10 % by weight or less, 7 % by weight or less, 5 % by weight or less, or 4 % by weight or less, relative to 100 % by weight of the total of the aromatic diol compound, the carbonate precursor and the one or more siloxane compounds.

The aromatic diol compound may be used in an amount of 40 % by weight or more, 50 % by weight or more, or 55 % by weight or more and 80 % by weight or less, 70 % by weight or less, or 65 % by weight or less, relative to 100 % by weight of the total of the aromatic diol compound, the carbonate precursor and the one or more siloxane compounds

The carbonate precursor may be used in an amount of 10 % by weight or more, 20 % by weight or more, or 30 % by weight and 60 % by weight or less, 50 % by weight or less, or 40 % by weight or less, relative to 100 % by weight of the total of the aromatic diol compound, the carbonate precursor and the one or more siloxane compounds.

The polymerization method may be, for example, an interfacial polymerization method. In this case, the polymerization reaction may be performed at low temperature under normal pressure, and it may be easy to control the molecular weight.

The interfacial polymerization is preferably performed in the presence of an acid binder and an organic solvent.

In addition, the interfacial polymerization may include, for example, a step of adding a coupling agent after prepolymerization and then polymerizing again. In this case, a high-molecular-weight copolycarbonate may be obtained.

Materials used in the interfacial polymerization are not specifically limited so long as they can be used for the polymerization of polycarbonate, and the use amount thereof may also be controlled as needed.

As the acid coupling agent, for example, an alkali metal hydroxide such as sodium hydroxide or potassium hydroxide, or an amine compound such as pyridine may be used.

The organic solvent is not particularly limited as long as it is a solvent commonly used in the polymerization of polycarbonate, and for example, a halogenated hydrocarbon such as methylene chloride or chlorobenzene may be used.

In the interfacial polymerization, a reaction promoter such as a tertiary amine compound, such as triethylamine, tetra-n-butylammonium bromide or tetra-n-butylphosphonium bromide, a quaternary ammonium compound, or a quaternary phosphonium compound to promote the reaction may be additionally used.

The reaction temperature of the interfacial polymerization is preferably 0 to 40°C, and the reaction time thereof is preferably 10 minutes to 5 hours.

In addition, during the interfacial polymerization reaction, it is preferred to maintain the pH at 9 or higher or 11 or higher.

In addition, when performing the interfacial polymerization, a molecular weight regulator may be further included. The molecular weight regulator may be added before, at the time of, or after the start of polymerization.

As the molecular weight regulator, mono-alkylphenol may be used, and the mono-alkylphenol one or more selected from the group consisting of, for example, p-tert-butylphenol, p-cumylphenol, decylphenol, dodecylphenol, tetradecylphenol, hexadecylphenol, octadecylphenol, eicosylphenol, docosylphenol and triacontylphenol, preferably p-tert-butylphenol. In this case, the molecular weight regulator effect is greatly improved.

The molecular weight regulator may be included, for example, in an amount of 0.01 parts by weight or more, 0,1

parts by weight or more, or 1 part by weight or more and 10 parts by weight or less, 6 parts by weight or less, or 5 parts by weight or less based on 100 parts by weight of the aromatic diol compound. In this range, a desired molecular weight may be obtained.

The siloxane-based copolycarbonate (Si-PC) is not particularly limited and may be manufactured and used by a method known in the art, or a commercially available material may be used.

The siloxane-based copolycarbonate (Si-PC) may be included in an amount of, for example, 22 % by weight or less, 10 to 21 % by weight as a particular example, preferably 13 to 21 % by weight of 100 % by weight of the total amount of all the components (the polybutylene terephthalate (PBT), the polycarbonate (PC), the siloxane-based copolycarbonate (Si-PC), the glass fiber and the additive) constituting the thermoplastic resin composition. In this case, the physical property balance between heat distortion temperature and impact strength may be satisfied.

## Glass fiber

In the present disclosure, glass fiber may be unsized glass fiber, or sized glass fiber having an adhesive. The adhesive may be selected from the group consisting of a silane coupling agent, a urethane adhesive, an epoxide adhesive, and/or an amino-silane copolymer.

In the present disclosure, a preferred silane coupling agent is at least one selected from the group consisting of epoxy-functional silanes, urethane-functional silanes and amino ureide-functional silanes, more preferably at least one selected from the group consisting of epoxycyclohexyl-functional silanes, glycidoxy-functional silanes, isocyanate-functional silanes and amino ureide-functional silanes, most preferably at least one selected from among 2-(3,4-epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane, 3-glycidoxypropyl triethoxysilane, N-2-(aminoethyl)-3-aminopropylmethyldimethoxysilane, N-2-(aminoethyl)-3-aminopropyltrimethoxysilane, N-2-(aminoethyl)-3-aminopropylmethyldimethoxysilane, N-2-(aminoethyl)-3-aminopropyltri butoxysilane, N-2-(aminoethyl)-3-aminopropylmethyldiethoxysilane, N-2-(aminoethyl)-3-aminopropyltriethoxysilane, 3-aminopropyltrimethoxysilane, 3-aminopropylmethyldiethoxysilane, 3-aminopropylmethyldimethoxysilane, 3-aminopropyldimethylmethoxysilane, 3-aminopropyldimethylethoxysilane, 3-aminopropyltriethoxysilane, 3-triethoxysilyl-N-(1,3 dimethyl-butylidene) propylamine, N-phenyl-3-aminopropyltrimethoxysilane, N-(vinylbenzyl)-2-aminoethyl-3-aminopropyltrimethoxysilane hydrochloride, 3-ureidopropyltrialkoxysilane and 3-isocyanatepropyltriethoxysilane.

A preferred urethane adhesive is a polyurethane adhesive such as a one-component polyurethane adhesive, or a two-component polyurethane adhesive.

In the present disclosure, glass fiber is preferably a chopped or milled glass fiber. The glass fiber may have various cross sections such as circular or non-circular.

The average length of the glass fiber is preferably 3 to 9 mm or 3 to 6mm, and the average diameter of the cross-section of the glass fiber is preferably 7 to 15 μm or 7 to 14 μm. In this range, the reinforcing effect may be maximized while not adversely affecting the heat distortion temperature.

The average length and the average diameter may be average values measured 10 times by a conventional methods.

Glass fiber is not particularly limited and may be manufactured and used by a method known in the art, or commercially available materials may be used.

The glass fiber may be included, for example, in an amount of 10 to 40 % by weight, 15 to 30 % by weight as a particular example, preferably 25 to 33 % by weight of 100 % by weight of the total amount of all the components (the polybutylene terephthalate (PBT), the polycarbonate (PC), the siloxane-based copolycarbonate (Si-PC), the glass fiber and the additive) constituting the thermoplastic resin composition. In this case, the physical property balance between heat distortion temperature and impact strength may be satisfied.

For example, E-glass fiber may be used.

As a particular example, grade NEG T187H manufactured by Nippon Electric Glass Co., Ltd. May be used.

## Thermoplastic resin composition

The thermoplastic resin composition according to an embodiment of the present invention may include an appropriate additive to improve the flowability thereof, etc.

The additive may be included, for example, in an amount 0.01 to 10 % by weight, 0.1 to 8 % by weight as a preferred example, 0.1 to 5 % by weight as a more preferred example, 0.1 to 5 % by weight as an even more preferred example, 0.1 to 1 % by weight as a most preferred example of 100 % by weight of the total amount of all the components (polybutylene terephthalate (PBT), polycarbonate (PC), the siloxane-based polycarbonate copolymer (Si-PC), glass fiber and the additive) constituting the thermoplastic resin composition. When the additive is included in an amount less than the range, molecular chains of polymers in a molded article manufactured using the thermoplastic resin composition including

the additive may be cleaved, resulting in property deterioration and discolor. When the additive is included in an amount greater than the range, the rigidity and heat resistance of a molded article manufactured using a thermoplastic resin composition including the additive may deteriorate.

The additive may include, for example, one or more selected from among a nucleating agent, an activator, talc, an antioxidant and a colorant.

The nucleating agent may be of a known type as long as it does not adversely affect the thermoplastic resin composition of the present invention. For example, sodium ionomer-based compounds among commercially available materials may be used.

The nucleating agent may be included in an amount of, for example, 0.01 to 5 % by weight, 0.1 to 3 % by weight as a preferred example, 0.1 to 2 % by weight as a more preferred example, 0.1 to 1 % by weight as an even more preferred example, 0.1 to 0.5 % by weight as a most preferred example of 100 % by weight of the total amount of all the components (polybutylene terephthalate (PBT), polycarbonate (PC), the siloxane-based polycarbonate copolymer (Si-PC), glass fiber and the additive) constituting the thermoplastic resin composition. When the content of the nucleating agent is too high beyond the range, the laser transmittance of a molded article manufactured using a thermoplastic resin composition including the nucleating agent may be reduced.

The activator is not particularly limited as long as it can secure the ease of ejection and flowability of an injection-molding screw used to manufacture a molded article from a thermoplastic resin composition containing the activator, but preferably may include a polyethylene wax

The activator may be included in an amount of, for example, 0.01 to 5 % by weight, as a preferred example 0.1 to 3 % by weight, as a more preferred example 0.1 to 2 % by weight, as an even more preferred example 0.1 to 1 % by weight, as a most preferred example 0.1 to 0.5 % by weight based on 100 % by weight of the total of all the components (polybutylene terephthalate (PBT), polycarbonate (PC), glass fiber and the additive) constituting the thermoplastic resin composition. When the content of the activator is too high beyond the range, appearance problems such as stains may occur on the surface of a molded article manufactured using a thermoplastic resin composition including the activator, thereby lowering appearance quality.

The activator may be of various known types so long as it does not adversely affect the thermoplastic resin composition of the present invention.

The talc is a plate-shaped inorganic particle, chemically belonging to the group of magnesium silicate, and it is preferable to use a product that is generally used as a strength reinforcing agent for thermoplastic materials.

The talc may have an average particle diameter of 4.0 ± 0.5 um, or 4.0 ± 0.3 um. In this range, strength may be sufficiently reinforced without adversely affecting the heat distortion temperature of a thermoplastic resin.

The talc may be added in an amount of, for example, 0.01 to 5 % by weight, 0.1 to 3 % by weight as a preferred example, 0.1 to 2 % by weight as a more preferred example, 0.1 to 1 % by weight as an even more preferred example, 0.1 to 0.5 % by weight as a most preferred example, based on 100 % by weight of the total of all the components (polybutylene terephthalate (PBT), polycarbonate (PC), glass fiber and the additive) constituting the thermoplastic resin composition. When the content of the talc is too high beyond the range, the laser transmittance of a molded article manufactured using a thermoplastic resin composition including the talc may be decreased. When the content of the talc is too low, the strength improvement may be insufficient.

The talc may be of various known types so long as it does not adversely affect the thermoplastic resin composition of the present invention.

The antioxidant is not particularly limited so long as it can prevent high-temperature degeneration of a molded article manufactured using a thermoplastic resin composition including the antioxidant, but, for example, it may include a primary antioxidant, a secondary antioxidant or both of them. In this case, oxidation due to heat may be prevented during an extrusion process, and the present invention may exhibit excellent mechanical properties.

The primary antioxidant and the secondary antioxidant may be included in a weight ratio (the primary antioxidant:the secondary antioxidant) of 1:0.5 to 1.5, of 1:0.5 to 1.2, or of 1:0.5 to 1, respectively. In this case, the processability and the physical property balance may be provided.

The primary antioxidant may be preferably a phenol-based antioxidant, and may include, for example, a hindered phenol-based stabilizer having a crystallization temperature (Tm) of 110 to 130 °C. As a particular example, the primary antioxidant may include tetrakis[ethylene-3-(3,5-di-t-butyl-hydroxy phenyl)propionate], octadecyl 3-(3,5-di-t-butyl-4-hydroxyphenyl)propionate or a combination thereof.

In the present disclosure, the crystallization temperature (Tm) refers to a temperature at which an irregular material structure changes into a regular arrangement due to molecular/atomic attraction to be crystallized, and may be measured using differential scanning calorimetry (DSC). As a particular example of measuring a crystallization temperature, a measuring vessel may be filled with about 0.5 mg to 10 mg of a sample, the nitrogen gas flow rate may be set to 20 ml/min, the temperature may be increased from 0 °C to 150 °C at a heating rate of 20 °C to identically make the thermal history of the sample to be measured. After maintaining this state for 2 minutes, the peak, i.e., the exothermic peak temperature during cooling, of the cooling curve of the heat flow measured by DSC while cooling from 150 °C to -100 °C at a

rate of 10 °C may be measured as a crystallization temperature. Here, the "peak" means the vertex or apex of the cooling curve or a heating curve described below, and for example, the inflection point where the sign of the slope of a tangent line changes based on the point where the slope of the tangent line is 0 is excluded.

The primary antioxidant may be included in an amount of, for example, 0.01 to 5 % by weight, 0.01 to 3 % by weight as a preferred example, 0.01 to 2 % by weight as a more preferred example, 0.01 to 1 % by weight as an even more preferred example, 0.05 to 0.5 % by weight as a most preferred example, based on 100 % by weight of the total of all the components (polybutylene terephthalate (PBT), polycarbonate (PC), glass fiber and the additive) constituting the thermoplastic resin composition. When the content of the primary antioxidant is too high, appearance problems such as stains may be generated on the surface of a molded article manufactured using a thermoplastic resin composition including the primary antioxidant, so that appearance quality may deteriorate.

The secondary antioxidant may be preferably a phosphorus-based antioxidant and may include, for example, a phosphite-based antioxidant. As a particular example, the secondary antioxidant may include tris-(2,4-di-tert-butylphenyl) phosphite, di-(2,4-di-t-butylphenyl)pentaerythritol diphosphite or a mixture thereof.

The secondary antioxidant may be included in an amount of, for example, 0.01 to 5 % by weight, 0.01 to 3 % by weight as a preferred example, 0.01 to 2 % by weight as a more preferred example, 0.01 to 1 % by weight as an even more preferred example, 0.1 to 0.5 % by weight as a most preferred example, based on 100 % by weight of the total of all the components (polybutylene terephthalate (PBT), polycarbonate (PC), glass fiber and the additive) constituting the thermoplastic resin composition, When the content of the secondary antioxidant is too high, appearance problems such as stains may be generated on the surface of a molded article manufactured using a thermoplastic resin composition including the secondary antioxidant, so that appearance quality may deteriorate.

The primary and secondary antioxidants may be of various known types so long as they do not adversely affect the thermoplastic resin composition of the present invention.

The colorant according to the present invention may be a coloring agent including a dye or a pigment.

The dye may be a blue-violet series dye, a red-orange series dye, or the like.

The blue-violet series dye may be anthraquinone.

The red-orange series dye may be perinone.

The pigment may be, for example, an inorganic pigment.

The inorganic pigment may be, for example, one or more selected from the group consisting of metal compounds such as Ti, Pb, Fe and Cr, and the metal compounds may be preferably a metal oxide or a metal hydroxide.

The colorant may be included in an amount of, for example, 0.01 to 5 % by weight, 0.01 to 3 % by weight as a preferred example, 0.1 to 3 % by weight as a more preferred example, 0.2 to 3 % by weight as an even more preferred example, of 100 % by weight of the total amount of all the components (polybutylene terephthalate (PBT), polycarbonate (PC), the siloxane-based polycarbonate copolymer (Si-PC), glass fiber and the additive) constituting the thermoplastic resin composition When the content of the colorant is too high, the crack resistance quality of a molded article manufactured using a thermoplastic resin composition including the activator may deteriorate.

The thermoplastic resin composition according to an embodiment of the present invention includes the polybutylene terephthalate (PBT) and the polycarbonate homopolymer (PC) in a weight ratio (PBT:PC) of 1:0.3 to 1:1.1 or in a weight ratio (PBT:PC) of 1:0.4 to 1:1.0. In this case, the heat distortion temperature and the impact strength may be improved, thereby satisfying the property balance and providing product reliability suitable for electrical components.

In the thermoplastic resin composition according to an embodiment of the present invention, a content ratio of the polybutylene terephthalate (PBT) to the polycarbonate homopolymer (PC) and the siloxane-based polycarbonate copolymer (Si-PC) is in a weight ratio (PBT:PC+Si-PC) range of 4:6 to 6:4 or in a weight ratio (PBT:PC+Si-PC) range of 4.5:5.5 to 5.5:4.5. In this case, the heat distortion temperature and the impact strength may be improved, thereby satisfying the property balance and providing product reliability suitable for electrical components.

In the thermoplastic resin composition according to an embodiment of the present invention, a content ratio of the polycarbonate homopolymer (PC) to siloxane-based polycarbonate copolymer (Si-PC) satisfies a weight ratio (PC:Si-PC) of 3.5:6.5 to 6.5:3.5 or a weight ratio (PC:Si-PC) of 3.8:6.2 to 6.2:3.8. In this case, the heat distortion temperature and the impact strength may be improved, thereby satisfying the property balance and providing product reliability suitable for electrical components.

When the use amount of the polybutylene terephthalate (PBT) is a, the use amount of the glass fiber is b, and the use amount of the polycarbonate homopolymer (PC) is c, the thermoplastic resin composition according to an embodiment of the present invention satisfies a>b>c. In this case, the heat distortion temperature and the impact strength may be improved, thereby satisfying the property balance and providing product reliability suitable for electrical components.

When the use amount of the polybutylene terephthalate (PBT) is a', the use amount of the glass fiber is b', and the use amount of the siloxane-based polycarbonate copolymer (Si-PC) is d, the thermoplastic resin composition according to an embodiment of the present invention satisfies a'>b'>d. In this case, the heat distortion temperature and the impact strength may be improved, thereby satisfying the property balance and providing product reliability suitable for electrical

components.

The thermoplastic resin composition according to an embodiment of the present invention includes 34.58 to 37 % by weight of the polybutylene terephthalate (PBT), 24 % by weight or less of the polycarbonate homopolymer (PC), and 24 % by weight or less of the siloxane-based polycarbonate copolymer (Si-PC) of 100 % by weight of the total of the base resin including the polybutylene terephthalate (PBT), the polycarbonate homopolymer (PC) and the siloxane-based polycarbonate copolymer (Si-PC); the glass fiber; and the additive. In this case, the heat distortion temperature and the impact strength may be improved, thereby satisfying the property balance and providing product reliability suitable for electrical components.

The thermoplastic resin composition may be used in an injection-molded article.

The thermoplastic resin composition may be used in an electrical component.

The electrical component may be used in a connector, a sensor component, or a component for a parking brake system, or the like.

The sensor component may be a radome, an advanced driver assistance system (ADAS), or the like.

## Method of preparing thermoplastic resin composition

Hereinafter, a method of preparing the thermoplastic resin composition of the present invention is described. In describing the method of preparing the thermoplastic resin composition of the present invention, all the contents of the thermoplastic resin composition described above are included.

The method of preparing the thermoplastic resin composition of the present invention may include, for example, feeding a base resin including polybutylene terephthalate (PBT), a polycarbonate homopolymer (PC) and a siloxane-based polycarbonate copolymer (Si-PC); glass fiber; and an additive into an extruder and melt-kneading and extruding the same.

A content ratio of the polybutylene terephthalate (PBT) to the polycarbonate homopolymer (PC) and the siloxane-based polycarbonate copolymer (Si-PC) is in a weight ratio (PBT:PC+Si-PC) range of 4:6 to 6:4.

A content ratio of the polycarbonate homopolymer (PC) to siloxane-based polycarbonate copolymer (Si-PC) may satisfy a weight ratio (PC:Si-PC) of 3.5:6.5 to 6.5:3.5.

When the use amount of the polybutylene terephthalate (PBT) is a, the use amount of the glass fiber is b, and the use amount of the polycarbonate homopolymer (PC) is c, a>b>c may be satisfied.

When the use amount of the polybutylene terephthalate (PBT) is a, the use amount of the glass fiber is b', and the use amount of the siloxane-based polycarbonate copolymer (Si-PC) is d, a'>b'>d may be satisfied.

In 100 % by weight of the total of the base resin including polybutylene terephthalate (PBT), polycarbonate homopolymer (PC) and the siloxane-based polycarbonate copolymer (Si-PC); the glass fiber; and the additive, the polybutylene terephthalate (PBT) may be included in an amount of 34.58 to 37 % by weight, the polycarbonate homopolymer (PC) may be included in an amount of 24 % by weight or less, the siloxane-based polycarbonate copolymer (Si-PC) may be included in an amount of 24 % by weight or less, and the glass fiber may be included in an amount of 25 to 33 % by weight.

In the melt-kneading, for example, other additives described above may be included.

The melt-kneading and extruding may be performed using, for example, one or more selected from the group consisting of a single-screw extruder, a twin-screw extruder and a Banbury mixer, preferably using a twin-screw extruder. The composition may be uniformly mixed using the extruder to obtain, for example, a pellet-type thermoplastic resin composition. In this case, deterioration of mechanical properties and thermal properties may be prevented, and excellent plating adhesion and appearance quality may be provided.

A step of manufacturing pellets using the extrusion kneader may be performed under conditions of, for example, an extrusion temperature of 230 to 300 °C, a flow ratio (F/R) of 50 to 90 kg/hr, and a screw rotation speed of 200 to 490 rpm, preferably under conditions of an extrusion temperature of 230 to 260 °C, an F/R of 50 to 90 kg/hr, and a screw rotation speed of 250 to 350 rpm.

After extruding the thermoplastic resin composition, injection-molding may be performed at an injection-molding temperature of 240 to 280 °C, 250 to 270 °C as a particular example, at a mold temperature of 40 to 80 °C, 50 to 70 °C as a particular example, and at an injection-molding rate of 10 to 80 mm/sec, 20 to 60 mm/sec as a particular example.

FIG. 2 below illustrates the cross-section of an extruder used in the method of manufacturing a molded article according to an embodiment of the present invention.

The extruder may include, for example, 6 or more kneading blocks, preferably 7 or more kneading blocks, more preferably 8 or more kneading blocks, 8 to 15 kneading blocks as a preferred example, 9 to 12 kneading blocks as a more preferred example. Here, it may be effective to use the kneading blocks in the order of forward, orthogonal, and reverse with respect to the resin flow direction, and a continuous or separated block combination may be used depending on the mixing method. In this case, the dispersibility of the components, the compatibility of the composition, etc. may be further improved, so that a higher-quality kneaded product may be provided

The type of the extruder is not particularly limited, and, when considering uniform mixing and dispersion, ease of processing, and economic efficiency, it may be preferable to use a twin-screw extruder with two screws.

The extruder includes a feeder for supplying raw materials into the barrel, a screw for transporting and mixing the materials supplied into the barrel, and a die for extruding kneaded materials, and the screw is composed of a plurality of screw elements to provide various functions.

One or more raw material feeders may be provided, and, optionally as needed, two or more feeders may be provided. For example, a main inlet and, optionally, an auxiliary inlet may be provided. As needed, two or more auxiliary inlets may be provided.

For example, all of the components, except for glass fiber, may be fed into the main inlet, and halogenated glass fiber may be fed into the auxiliary inlet 1.

Referring to FIG. 1 below, the extruder 100 may include first to third inlets 11, 12 and 13, and first to third kneading blocks 21, 22 and 23, and materials introduced along the first direction (DR1) may be kneaded therein and discharged therefrom, as a particular example.

Specifically, materials injected into the first inlet 11 may be kneaded in a process of moving to the first kneading block 21, so that a first kneaded material may be formed in the first kneading block 21. The materials injected into the second inlet 12 may be mixed with the first kneaded material and may be kneaded in a process of moving to the second kneading block 22, so that a second kneaded material may be formed in the second kneading block 22. In addition, materials injected into the third inlet 13 may be mixed with the second kneaded material and may be kneaded in a process of moving to the third kneading block 23, so that a final product may be formed in the third kneading block 23.

Furthermore, a molded article including the thermoplastic resin composition of the present invention will be described. When describing a molded article including the thermoplastic resin composition of the present invention, all of the contents of the thermoplastic resin composition described above are included.

## Molded article

The thermoplastic resin composition of the present invention may be usefully applied to a molded article requiring heat distortion temperature and impact strength through synergy between components.

The method of manufacturing the molded article may be a method commonly used in the art. For example, a melt-kneaded mixture or pellets of the thermoplastic resin composition according to the present invention or a sheet (plate) molded therefrom may be used as raw materials for extrusion molding, casting, press molding, pressure molding, thermal bending molding, compression molding, calendar molding, rotational molding, injection molding, injection-molding compression molding, etc.

The thermoplastic resin composition of the present invention may be prepared in the form of pellets by, for example, feeding polybutylene terephthalate (PBT), polycarbonate (PC), siloxane-based copolycarbonate (Si-PC), glass fiber and an additive into a main inlet of a twin-screw extruder (φ40, L/D: 42, SM Platek equipment) set to 230 °C under conditions of 250 rpm and a flow rate of 50 kg/h and melt-kneading and extruding the components.

As another example, the thermoplastic resin composition of the present invention may be prepared in the form of pellets by introducing polybutylene terephthalate (PBT), polycarbonate (PC), siloxane-based copolycarbonate (Si-PC), and an additive into a main inlet of a twin-screw extruder (φ40, L/D: 42, SM Platek equipment) set to 260 °C under a condition of 375 rpm, introducing glass fiber into auxiliary inlets at a flow rate of 75 kg/h, and melt-kneading and extruding the components.

A molded article may be manufactured by introducing the pellets into an injection-molding machine.

To indirectly check the physical properties of the manufactured molded article, the pellets may be injection-molded at an injection temperature of 260 °C, a mold temperature of 60 °C, and an injection rate of 30 mm/sec using an injection molding machine (ENGEL CO., 80 tons) to obtain an ISO standard specimen.

The manufactured specimen may have a flow index (260 °C, 2.16 kgf) of, for example, 5 g/10 min or more, 10 to 20 g/10 min as a particular example, as measured according to ISO 1133.

The laser transmittance (%), measured using ETM-31 equipment (980 nm) manufactured by EVlaser, of the molded article including the thermoplastic resin composition of the present invention may be 67.5% or more, 67.5% to 80% as a particular example, preferably 67.5% to 75%.

To obtain the laser transmittance, a rectangular specimen measuring 60 mm (width) X 60 mm (height) X 1.5 mm (thickness) was manufactured by injection molding a resin-molded article and material as shown in FIG. 1 below, and a laser with a laser irradiation wavelength of 980 nm and an output of 10 mW was shot to each of a gate area (A) and a non-gate area (B) of the specimen using ETM-31 (EV Laser Co., Ltd.), and then the returned intensity value was measured. The laser transmittance was calculated according to Mathematical Equation 1 below.

Here, the laser transmittance was measured 5 times for each area. In Tables 1 and 2 below, the laser transmittance of the gate part is the average of the laser transmittance measurement values of the gate part, and the maximum transmittance is the average of the laser transmittance measurement values of locations excluding the gate

part.

[Mathematical Equation 1]

$$\text{Laser transmittance } (\%) = 100 \times Po / Pi$$

In Mathematical Equation 1, Po is a laser output (output) passing through the specimen, and Pi is a laser output (input) before passing through the specimen.

Here, the laser output before passing through the specimen may be, for example, 10 mW.

A molded article including the thermoplastic resin composition of the present invention may have a heat distortion temperature of 167.6 °C or higher, 167.6 to 185.4 °C as a particular example, as measured under a load of 0.45 MPa (flatwise) on a 4 mm thick specimen according to ISO 75.

The molded article including the thermoplastic resin composition of the present invention may have a room-temperature Izod impact strength (23 °C, Notched) of, for example, 9.5 $kJ/m^2$ or more, 9.75 to 11.52 $kJ/m^2$ as a particular example, as measured according to ISO 180.

The molded article including the thermoplastic resin composition of the present invention may have a low-temperature Izod impact strength (-30 °C, Notched) of, for example, 8.4 $kJ/m^2$ or more, 8.55 to 9.8 $kJ/m^2$ as a particular example, as measured according to ISO 180.

The molded article including the thermoplastic resin composition of the present invention may mean a molded article made of a thermoplastic resin composition or including a thermoplastic resin composition.

The molded article may be specifically an electrical component, but is not limited to a specific type.

That is, in the thermoplastic resin composition according to an embodiment of the present invention, polybutylene terephthalate (PBT) is mixed with polycarbonate (PC) and siloxane-based copolycarbonate (Si-PC) in a predetermined mixing ratio. In this case, a molded article made of the thermoplastic resin composition may satisfy the physical property balance between heat distortion temperature and impact strength, and may further improve the heat resistance required for improved radar performance and the impact strength required for diversified applications of radomes, thereby being usable in a wider range of electrical components including radomes.

In describing the thermoplastic resin composition of the present invention, the method of preparing the same, and the molded article including the same, it should be noted that other conditions or equipment not explicitly described herein may be appropriately selected within the range commonly practiced in the art without particular limitation. In addition, % means % by weight unless otherwise defined.

Hereinafter, embodiments of the present invention will be described in detail so that a person skilled in the art to which the present invention pertains can easily practice the present invention. However, the present invention may be embodied in many different forms and is not limited to the embodiments described herein.

**[Examples]**

**Examples 1 to 3 and Comparative Examples 1 to 8**

Raw materials used in examples and comparative examples were as follows:

(A) Polybutylene terephthalate (PBT): Intrinsic viscosity (IV) 0.83, product name: TH6082A
(B) Polycarbonate
B-1) Polycarbonate (PC): Having a melting index of 22 g/10 min as measured 300 °C under a load of 1.2 kg according to ASTM D1238, and a mold shrinkage rate of 0.005 to 0.007 in/in measured according to ASTM D955, product name LUPOY PC1300, manufactured by LG Chemical Co.
B-2) Siloxane-based copolycarbonate (Si-PC): Product name LUPOY PC8000-05, manufactured by LG Chemical Co.
(C) Glass fiber: Having an average length of 7 to 15 um, T-187H manufactured by NEG Co.
(D) Additives
D-1) Nucleating agent: P250 (sodium ionomer series), manufactured by Bruggemann Co.
D-2) Talc: KC-3000 (average particle diameter: 4.0±0.5um), manufactured by Koch Co.
D-3) Primary antioxidant: IR 1010
D-4) Secondary antioxidant: PEP 36

The raw materials of the thermoplastic resin composition summarized in Tables 1 and 2 were mixed, and then a thermoplastic resin composition having a uniform dispersion was manufactured into a pellet form through extrusion, and then the pellets were heated, injected into a mold, and then cooled to produce a specimen through an injection process.

Specifically, the respective components summarized in Tables 1 and 2 below were mixed with a mixer, and then fed at a feed rate of 50 kg/h at 250 rpm into a main inlet of a twin-screw extruder (φ40, L/D: 42, SM Platek equipment) set to 250 °C, and then extruded, thereby manufacturing pellets formed of the thermoplastic resin composition. Here, glass fiber was fed into auxiliary inlets of the extruder, and the extruder was equipped with 9 mixing blocks.

The pellets were dried in a 120 °C convection oven for 4 hours or longer, and then injection-molding was performed at an injection-molding temperature of 250 °C, a mold temperature of 60 °C and an injection-molding rate of 30 mm/sec using an injection-molding machine (ENGEL Co., 80 tons), thereby manufacturing a specimen.

[Table 1]

| Classification | Example1 | Example2 | Example3 |
|---|---|---|---|
| A | 34.6 | 34.6 | 34.6 |
| B-1 | 20.8 | 17.3 | 13.8 |
| B-2 | 13.8 | 17.3 | 20.8 |
| C | 30 | 30 | 30 |
| D-1 | - | - | - |
| D-2 | - | - | - |
| D-3 | 0.4 | 0.4 | 0.4 |
| D-4 | 0.4 | 0.4 | 0.4 |

(Each of the raw materials used in Table 1 was added in a unit of % by weight based on 100 % by weight of the total of A to D-4.)

[Table 2]

| Classification | Comparative Example1 | Comparative Example2 | Comparative Example3 | Comparative Example4 | Comparative Example5 | Comparative Example6 | Comparative Example7 | Comparative Example8 |
|---|---|---|---|---|---|---|---|---|
| A | 41.5 | 27.7 | 34.55 | 34.55 | 34.6 | 34.6 | 34.6 | 29.2 |
| B-1 | 27.7 | 41.5 | 344.55 | 34.55 | 34.6 | - | 29.6 | - |
| B-2 | - | - | - | - | - | 34.6 | 5 | 40 |
| C | 30 | 30 | 30 | 30 | 30 | 30 | 30 | 30 |
| D-1 | - | - | 0.1 | - | - | - | - | - |
| D-2 | - | - | - | 0.1 | - | - | - | - |
| D-3 | 0.4 | 0.4 | 0.4 | 0.4 | 0.4 | 0.4 | 0.4 | 0.4 |
| D-4 | 0.4 | 0.4 | 0.4 | 0.4 | 0.4 | 0.4 | 0.4 | 0.4 |

(Each of the raw materials used in Table 2 was added in a unit of % by weight based on 100 % by weight of the total of A-1 to D-4.)

**Experimental Example** 1 : **Property evaluation of molded article specimen**

The properties of the molded article specimen manufactured according to each of Examples 1 to 3 and Comparative Examples 1 to 8 were evaluated. The evaluation criteria were as follows.

- Laser transmittance (%):
  To obtain the laser transmittance, a rectangular specimen measuring 60 mm (width) X 60 mm (height) X 1.5 mm

(thickness) was manufactured by injection molding a resin-molded article and material as shown in FIG. 1 below, and a laser with a laser irradiation wavelength of 980 nm and an output of 10 mW was shot to each of a gate area (A) and a non-gate area (B) of the specimen using ETM-31 (EV Laser Co., Ltd.), and then the returned intensity value was measured. The laser transmittance was calculated according to Mathematical Equation 1 below.

Here, the laser transmittance was measured 5 times for each area. In Tables 3 and 4 below, the laser transmittance of the gate part is the average of the laser transmittance measurement values of the gate part, and the maximum transmittance is the average of the laser transmittance measurement values of locations excluding the gate part.

[Mathematical Equation 1]

$$\text{Laser transmittance (\%)} = 100 \times Po / Pi$$

In Mathematical Equation 1, Po is a laser output (output) passing through the specimen, and Pi is a laser output (input) before passing through the specimen.

- Heat distortion temperature (HDT): Measured under a load of 0.45 MPa (flatwise) using a specimen with a thickness of 4 mm according to ISO 75.
- Room-temperature impact strength (IZOD): Measured using a specimen having a thickness of 4 mm according to ISO 180 (Notched, 23 °C)
- Low-temperature impact strength (IZOD): Measured using a specimen having a thickness of 4 mm according to ISO 180 (Notched, -30 °C)

The results measured according to the evaluation criteria are shown in Tables 3 and 4 below:

[Table 3]

| Classification | Example1 | Example2 | Example3 |
|---|---|---|---|
| Laser transmittance (%) | 67.5 | 67.6 | 68.2 |
| Heat distortion temperature (°C) | 167.6 | 181.1 | 185.4 |
| Room-temperature impact strength ($kJ/m^2$) | 9.73 | 10.96 | 11.52 |
| Low-temperature impact strength ($kJ/m^2$) | 8.55 | 8.91 | 9.6 |

[Table 4]

| Classifi cation | Compar ative Exampl e1 | Compar ative Exampl e2 | Compar ative Exampl e3 | Compar ative Exampl e4 | Compar ative Exampl e5 | Compar ative Exampl e6 | Compar ative Exampl e7 | Compar ative Exampl e8 |
|---|---|---|---|---|---|---|---|---|
| Laser transmit tance (%) | 47.5 | 70.2 | 46.3 | 32.3 | 67.4 | 62.9 | 67.9 | 63.5 |
| Heat distorti on temperat ure (°C) | 197.6 | 128.2 | 190.2 | 195.8 | 167.5 | 185.2 | 168.2 | 155.3 |
| Room-temperat ure impact strength ($kJ/m^2$) | 8.8 | 9.1 | 8.13 | 8.42 | 9.24 | 12.1 | 9.2 | 12.9 |
| Low-temperat ure impact strength ($kJ/m^2$) | 7.81 | 8.3 | 7.54 | 7.56 | 8.13 | 9.71 | 8.21 | 10.2 |

Referring to Tables 3 and 4, it was confirmed that, since the thermoplastic resin compositions of Examples 1 to 3 according to the present invention included polybutylene terephthalate (PBT); and polycarbonate (PC) and siloxane-based copolycarbonate (Si-PC) in the predetermined mixing ratio, the physical property balance between heat distortion temperature and impact strength was improved, so that heat resistance required for radar performance improvement and impact strength required for diversified applications of radomes were satisfied, thereby providing product reliability. On the other hand, it was confirmed that Comparative Examples 1 to 5 excluding siloxane-based copolycarbonate (Si-PC) showed decreased laser transmittance, room-temperature impact strength and low-temperature impact strength, compared to Example 1, thereby not providing heat resistance required for radar performance improvement and impact strength required for diversified applications of radomes.

Meanwhile, it was confirmed that Comparative Example 5 not including siloxane-based copolycarbonate (Si-PC), but including polybutylene terephthalate (PBT) and polycarbonate (PC) mixed in an appropriate range and excluding a nucleating agent and talc showed improved laser transmittance and room-temperature/low-temperature impact strength, compared to Comparative Examples 1 to 4, but showed a significantly lowered heat distortion temperature.

In addition, it was confirmed that Comparative Example 6 including siloxane-based copolycarbonate (Si-PC), but excluding polycarbonate (PC) showed decreased laser transmittance, compared to Example 1.

In addition, it was confirmed that Comparative Example 7 including a small amount of siloxane-based copolycarbonate (Si-PC) out of an appropriate range showed a lowered heat distortion temperature, compared to Example 2.

Further, it was confirmed that Comparative Example 8 including a large amount of siloxane-based copolycarbonate (Si-PC) beyond an appropriate range showed decreased laser transmittance and lowered heat distortion temperature, compared to Example 1.

That is, since the thermoplastic resin composition according to an embodiment of the present invention includes polybutylene terephthalate (PBT), polycarbonate (PC), siloxane-based polycarbonate (Si-PC) and glass fiber, a molded article manufactured using the thermoplastic resin composition satisfies the physical property balance between heat distortion temperature and impact strength, heat resistance required for radar performance improvement, and impact strength required for diversified applications of radomes, thereby being suitable for use in electrical components, etc.

[Description of Symbols]

100: extruder 11: first inlet 12: second inlet
13: third inlet 21: first kneading block 22: second kneading block
23: third kneading block DR1: first direction

**Claims**

1. A thermoplastic resin composition, comprising: polybutylene terephthalate (PBT), polycarbonate (PC) and siloxane-based copolycarbonate (Si-PC), and glass fiber,

   wherein a weight ratio of the polybutylene terephthalate (PBT) to the polycarbonate (PC) and the siloxane-based copolycarbonate (Si-PC) is in a range of 4:6 to 6:4 (PBT:PC+Si-PC),
   a weight ratio of the polycarbonate (PC) to the siloxane-based copolycarbonate (Si-PC) satisfies 3.5:6.5 to 6.5:3.5 (PC:Si-PC),
   a use amount of the polybutylene terephthalate (PBT) is a, a use amount of the glass fiber is b, and a use amount of the polycarbonate (PC) is c, a>b>c is satisfied, and
   a use amount of the polybutylene terephthalate (PBT) is a', a use amount of the glass fiber is b', and a use amount of the siloxane-based copolycarbonate (Si-PC) is d, a'>b'>d is satisfied.

2. A thermoplastic resin composition, comprising: of 100 % by weight of a total of polybutylene terephthalate (PBT), polycarbonate (PC) and siloxane-based copolycarbonate (Si-PC); glass fiber; and an additive,

   31.3 to 37 % by weight of the polybutylene terephthalate (PBT),
   24 % by weight or less of the polycarbonate (PC),
   24 % by weight or less of the siloxane-based copolycarbonate (Si-PC), and
   10 to 40 % by weight of the glass fiber.

3. The thermoplastic resin composition according to claim 1 or 2, wherein the polybutylene terephthalate (PBT) has a weight average molecular weight of 10,000 to 80,000 g/min.

4. The thermoplastic resin composition according to claim 1 or 2, wherein the polybutylene terephthalate (PBT) and polycarbonate (PC) are comprised in a weight ratio (PBT:PC) of 1:0.3 to 1:1.1.

5. The thermoplastic resin composition according to claim 1, wherein the polycarbonate (PC) is comprised in an amount of 13 to 21 % by weight of 100 % by weight of a total of the polybutylene terephthalate (PBT), the polycarbonate (PC), the siloxane-based copolycarbonate (Si-PC), the glass fiber and the additive.

6. The thermoplastic resin composition according to claim 1, wherein the siloxane-based copolycarbonate (Si-PC) is comprised in an amount of 13 to 21 % by weight of 100 % by weight of a total of the polybutylene terephthalate (PBT), the polycarbonate (PC), the siloxane-based copolycarbonate (Si-PC), the glass fiber and an additive.

7. The thermoplastic resin composition according to claim 1, wherein the polycarbonate (PC) has a melting index of 0.1 to 30 g/10 min, as measured at 300 °C under a load of 1.2 kg according to ASTM D1238 and has a mold shrinkage rate of 0.005 to 0.007 in/in, as measured according to ASTM D955.

8. The thermoplastic resin composition according to claim 1, wherein the glass fiber is a chop strand having an average diameter of 7 to 15 μm and an average length of 3 to 9 mm.

9. The thermoplastic resin composition according to claim 1, wherein the additive comprises one or more selected from among a nucleating agent, an activator, talc, an antioxidant and a colorant.

10. The thermoplastic resin composition according to claim 1, wherein the thermoplastic resin composition is a material used in an electrical component.

11. The thermoplastic resin composition according to claim 1, wherein the thermoplastic resin composition has a heat distortion temperature of 167.6 °C or higher as measured under a load of 0.45 MPa (flatwise) using a specimen having a thickness of 4 mm according to ISO 75, a room-temperature Izod impact strength (23 °C, Notched) of 9.5 kJ/$m^2$ or more as measured using a specimen having a thickness of 4 mm according to ISO 180, and a low-temperature Izod impact strength (-30 °C, Notched) of 8.4 kJ/$m^2$ or more as measured using a specimen having a thickness of 4 mm according to ISO 180.

12. A method of preparing a thermoplastic resin composition, the method comprising:

    feeding polybutylene terephthalate (PBT), polycarbonate (PC) and siloxane-based copolycarbonate (Si-PC); glass fiber; and an additive into an extruder, and performing melt-kneading and extruding,
    wherein a weight ratio of the polybutylene terephthalate (PBT) to the polycarbonate (PC) and the siloxane-based copolycarbonate (Si-PC) is in a range of 4:6 to 6:4 (PBT:PC+Si-PC),
    a weight ratio of the polycarbonate (PC) to the siloxane-based copolycarbonate (Si-PC) satisfies 3.5:6.5 to 6.5:3.5 (PC:Si-PC),
    a use amount of the polybutylene terephthalate (PBT) is a, a use amount of the glass fiber is b, and a use amount of the polycarbonate (PC) is c, a>b>c is satisfied, and
    a use amount of the polybutylene terephthalate (PBT) is a’, a use amount of the glass fiber is b’, and a use amount of the siloxane-based copolycarbonate (Si-PC) is d, a’>b’>d is satisfied.

13. A method of preparing a thermoplastic resin composition, the method comprising: feeding, of 100 % by weight of a total of polybutylene terephthalate (PBT), polycarbonate (PC) and siloxane-based copolycarbonate (Si-PC); glass fiber; and an additive, 31.3 to 37 % by weight of the polybutylene terephthalate (PBT), 24 % by weight or less of the polycarbonate (PC), 24 % by weight or less of the siloxane-based copolycarbonate (Si-PC), and 10 to 40 % by weight of the glass fiber into an extruder and performing melt-kneading and extruding.

14. A molded article comprising the thermoplastic resin composition according to one of claims 1 to 11.

15. The molded article according to claim 14, wherein the molded article is an electrical component.

【FIG. 1】

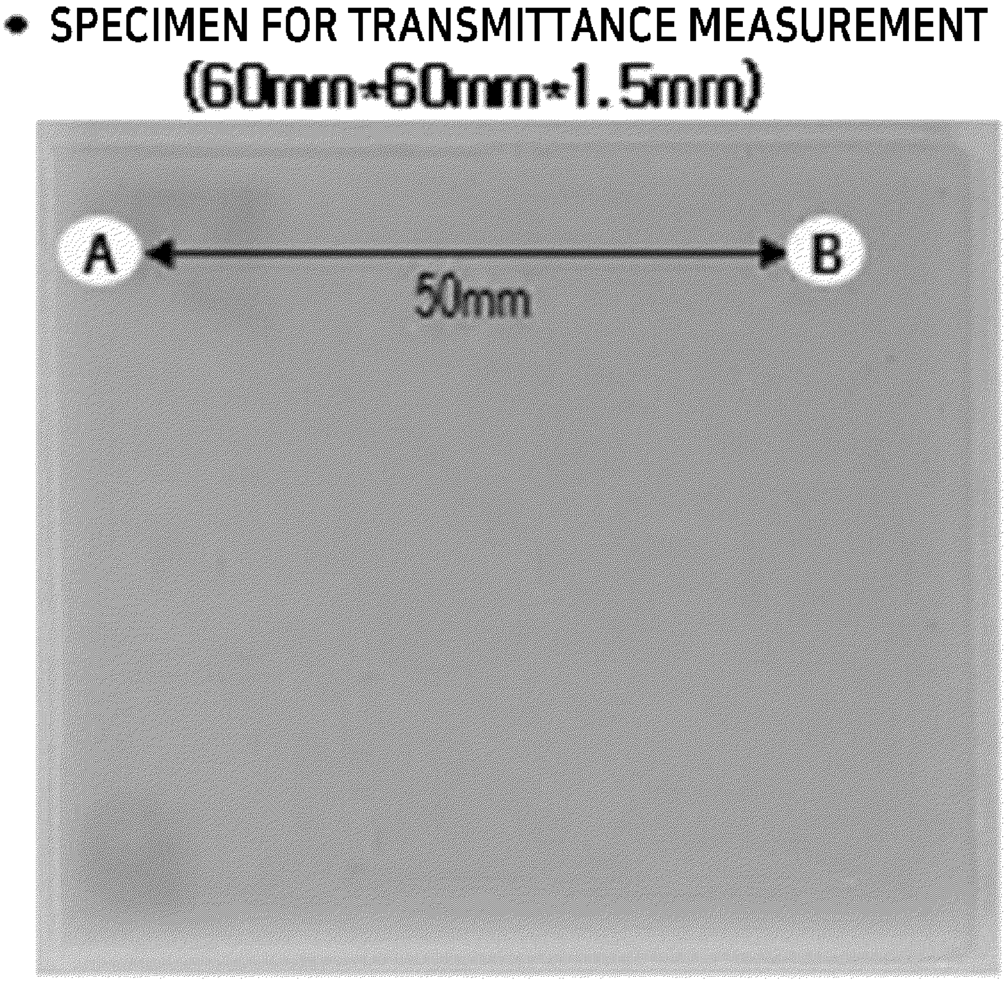
SPECIMEN FOR TRANSMITTANCE MEASUREMENT
(60mm*60mm*1.5mm)
A
B
50mm

【FIG. 2】

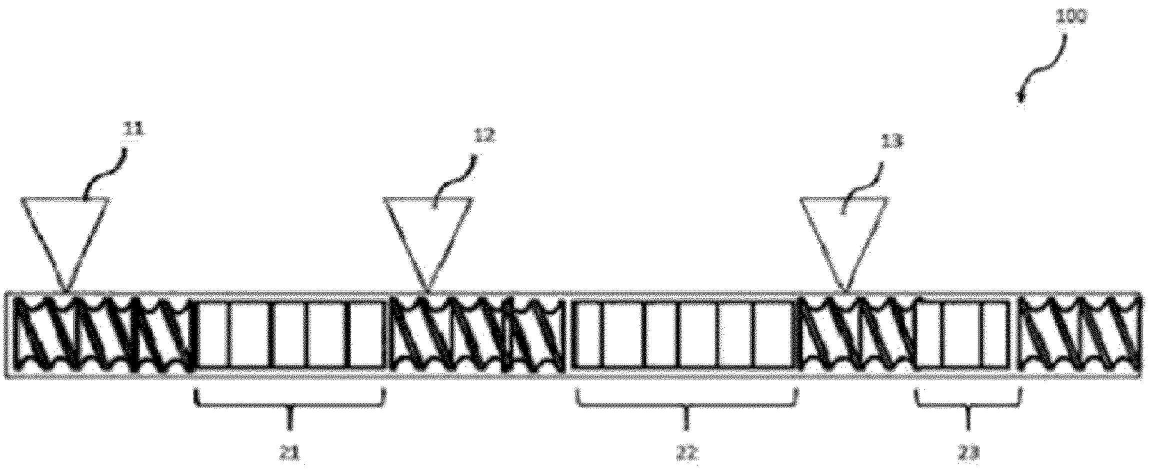
100
11
12
13
21
22
23

## INTERNATIONAL SEARCH REPORT

International application No. **PCT/KR2024/010890**

### A. CLASSIFICATION OF SUBJECT MATTER

**C08L 67/02**(2006.01)i; **C08L 69/00**(2006.01)i; **C08K 7/14**(2006.01)i; **C08G 64/18**(2006.01)i; **C08J 3/22**(2006.01)i

According to International Patent Classification (IPC) or to both national classification and IPC

### B. FIELDS SEARCHED

Minimum documentation searched (classification system followed by classification symbols)

C08L 67/02(2006.01); C08G 77/448(2006.01); C08J 5/04(2006.01); C08L 51/04(2006.01); C08L 67/03(2006.01); C08L 69/00(2006.01); C08L 83/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리부틸렌 테레프탈레이트(polybutylene terephthalate), 폴리카보네이트(polycarbonate), 실록산계 코폴리카보네이트(siloxane-based copolycarbonate), 유리섬유(glass fiber), 전장품(electric vehicle part)

### C. DOCUMENTS CONSIDERED TO BE RELEVANT

| Category* | Citation of document, with indication, where appropriate, of the relevant passages | Relevant to claim No. |
|---|---|---|
| X | KR 10-2016-0016963 A (SABIC GLOBAL TECHNOLOGIES B.V.) 15 February 2016 (2016-02-15)<br>See paragraphs [0082], [0292], [0306], [0307] and [0316]; claims 1, 7, 9, 11 and 20; and tables 1 and 13. | 1-13 |
| A | KR 10-2012-0073818 A (CHEIL INDUSTRIES INC.) 05 July 2012 (2012-07-05)<br>See entire document. | 1-13 |
| A | KR 10-2014-0086056 A (SAMYANG CORPORATION) 08 July 2014 (2014-07-08)<br>See entire document. | 1-13 |
| A | JP 2014-095033 A (MITSUBISHI ENGINEERING PLASTICS CORP.) 22 May 2014 (2014-05-22)<br>See entire document. | 1-13 |
| A | KR 10-2023-0096633 A (LOTTE CHEMICAL CORPORATION) 30 June 2023 (2023-06-30)<br>See entire document. | 1-13 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 November 2024** | **06 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/010890**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **15**
because they relate to parts of the international application that do not comply with the prescribed requirements to such an extent that no meaningful international search can be carried out, specifically:

Claim 15 refers to a claim violating the manner of referring to multiple dependent claims (PCT Rule 6.4(a)), and thus is unclear.

3. ☑ Claims Nos.: **14**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2024/010890**

| Patent document cited in search report | Publication date (day/month/year) | Patent family member(s) | Publication date (day/month/year) |
|---|---|---|---|
| KR 10-2016-0016963 A | 15 February 2016 | CN 105264017 A | 20 January 2016 |
| | | CN 105682646 A | 15 June 2016 |
| | | EP 3003281 A1 | 13 April 2016 |
| | | EP 3003281 A4 | 19 April 2017 |
| | | EP 3003281 B1 | 19 September 2018 |
| | | EP 3004244 A1 | 13 April 2016 |
| | | KR 10-2067118 B1 | 24 February 2020 |
| | | US 2014-0357769 A1 | 04 December 2014 |
| | | US 2015-0150822 A1 | 04 June 2015 |
| | | US 9187639 B2 | 17 November 2015 |
| | | WO 2014-195874 A1 | 11 December 2014 |
| | | WO 2014-197640 A1 | 11 December 2014 |
| KR 10-2012-0073818 A | 05 July 2012 | CN 102532842 A | 04 July 2012 |
| | | CN 102532842 B | 18 May 2016 |
| | | EP 2468818 A1 | 27 June 2012 |
| | | EP 2468818 B1 | 19 November 2014 |
| | | KR 10-1453773 B1 | 21 October 2014 |
| | | US 2012-0165425 A1 | 28 June 2012 |
| KR 10-2014-0086056 A | 08 July 2014 | KR 10-1530319 B1 | 22 June 2015 |
| JP 2014-095033 A | 22 May 2014 | JP 6039372 B2 | 07 December 2016 |
| KR 10-2023-0096633 A | 30 June 2023 | CN 116333457 A | 27 June 2023 |
| | | EP 4201995 A1 | 28 June 2023 |
| | | US 2023-0203302 A1 | 29 June 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230132213
- KR 20200066480